(19) Europäisches Patentamt / European Patent Office / Office européen des brevets

(11) **EP 3 712 777 A1**

(12) **EUROPEAN PATENT APPLICATION**
published in accordance with Art. 153(4) EPC

(43) Date of publication:
**23.09.2020 Bulletin 2020/39**

(21) Application number: **18875747.0**

(22) Date of filing: **25.09.2018**

(51) Int Cl.:
*G06F 16/00* (2019.01)     *G05B 23/02* (2006.01)

(86) International application number:
**PCT/JP2018/035281**

(87) International publication number:
**WO 2019/092997 (16.05.2019 Gazette 2019/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.11.2017 JP 2017217883**

(71) Applicant: **Hitachi, Ltd.**
**Tokyo 100-8280 (JP)**

(72) Inventors:
• **HAYASHI, Yoshiharu**
  **Tokyo 100-8280 (JP)**
• **SEKIAI, Takaaki**
  **Tokyo 100-8280 (JP)**
• **KUROHA, Yoshiyuki**
  **Tokyo 100-8280 (JP)**
• **HIRATSUKA, Masayuki**
  **Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **DATA CLASSIFICATION DEVICE**

(57)     An object is to provide a data classification device and an abnormality diagnosis system capable of reducing erroneous detection. In order to solve the above problem, a data classification device according to the present invention is a data classification device including: a data classification unit 30 that classifies operational data into a plurality of categories; and a classification result database 40 that manages an output of the data classification unit. The data classification unit 30 preferentially selects a category with a smaller generation number representing a generation order of the category as a category candidate and determines a category of the operational data.

## FIG. 4

## Description

Technical Field

The present invention relates to a data classification device and an abnormality diagnosis system.

Background Art

Many sensors, such as a thermometer, a pressure gauge, and a flowmeter, are installed in power plants or devices in order for monitoring and control. In addition, in recent years, sensors such as an acceleration sensor have also been installed in infrastructure facilities such as bridges and roads to monitor states of the facilities.

A feature of such sensor data is that there is a plurality of pieces of related sensor data and that such data are multi-dimensional time-series data measured during a certain time cycle. Various methods have been proposed as a state monitoring method utilizing such multi-dimensional time-series data. The simplest method is a method of selecting a data item that needs to be noted from among multi-dimensional data items and detecting a state change based on whether a value of the data item exceeds a preset threshold. In addition, an abnormality is detected by clustering multi-dimensional data and dividing the data into categories in a method described in NPL 1.

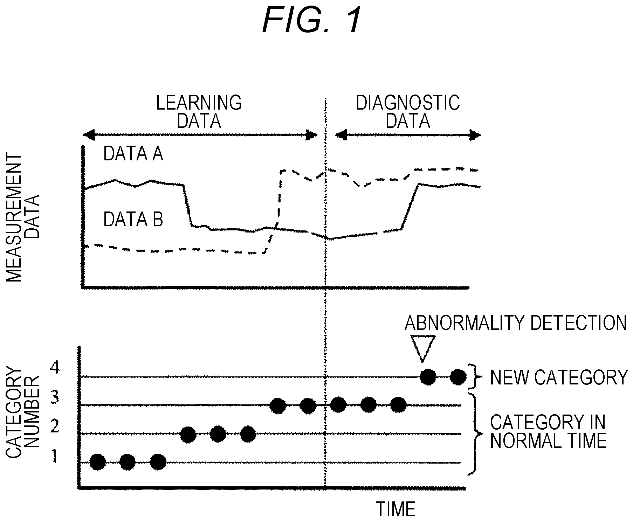

The method described in NPL 1 will be described with reference to FIG. 1. In this prior art, adaptive resonance theory (hereinafter, referred to as ART) is used as one of data clustering techniques. The ART has a function of classifying multi-dimensional data into a plurality of categories according to a degree of similarity. This detection method uses such a function to detect a facility abnormality in two phases including a learning phase and a diagnostic phase.

In the learning phase, operational data in which a facility is in a normal state is input to the ART. Since the ART classifies the operational data into the plurality of categories according to the degree of similarity of data, it is possible to define a category to be generated when the operational data is normal.

In the diagnostic phase, operational data (diagnostic data) that is to be diagnosed is input to the ART that has learned the normal data. As a result, data with a high degree of similarity with the learning data is classified into the same category as that in the learning phase. However, if any abnormality occurs in the facility and a tendency of data changes, the data is classified into a category (new category) different from that of the learning data. In this manner, it is possible to determine the state change of the facility based on the category classified by the ART.

Citation List

Non-Patent Literature

NPL 1: Journal of the Japan Society of Mechanical Engineers Vol. 118 (2015) No. 1163 p. 624-627
NPL 2: G. A. Carpenter and S. Grossberg: "ART2:Self-OrganizatioNo.f stable category recognition codes for analog input patterns", Applied Optics, Vol26, No.23, (1987)

Summary of Invention

Technical Problem

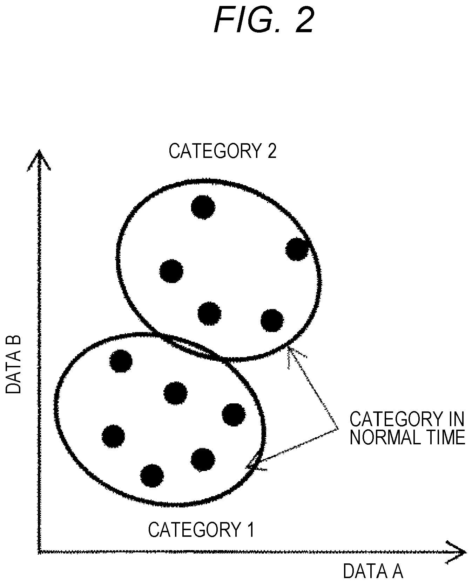

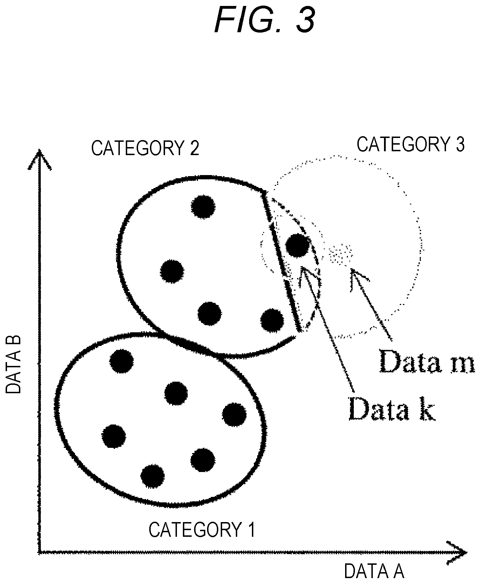

In the technique described in NPL 1, however, there is a case where a part of data that has been classified as normal data is classified into a new category. Such an example will be described with reference to FIGS. 2 and 3.

FIG. 2 is a graph schematically illustrating a classification result of learning data. A part surrounded by practice indicates an area of a category at the time of learning. FIG. 3 schematically illustrates a classification result when data m is input in a vicinity of the category area at the time of learning and a new category is generated. As illustrated in FIG. 3, when the new category is generated to be close to the learning data, data k that has been classified as the category at the time of learning may be classified as the new category. In the ART, data which may enter both category areas is classified into a closer category, and thus, the above-described event may occur depending on a generation location of the new category. That is, the detection accuracy is not considered since data classification characteristics change with the generation of the new category.

Solution to Problem

A representative aspect of the present invention is a data classification device including: a data classification unit that classifies operational data into a plurality of categories; and a classification result database that manages an output of the data classification unit, the data classification unit preferentially selecting a category with a smaller generation number representing an order of generation of the category as a category candidate and determining a category of the operational data.

Advantageous Effects of Invention

According to the present invention, it is possible to provide a data classification device and an abnormality diagnosis system capable of reducing erroneous detection.

Brief Description of Drawings

[FIG. 1] FIG. 1 is a graph illustrating a concept of classifying data using a method described in NPL 1.
[FIG. 2] FIG. 2 is a graph illustrating an example in which normal data is learned using the method described in NPL 1.
[FIG. 3] FIG. 3 is a graph illustrating an example in which data is diagnosed using the method described in NPL 1.
[FIG. 4] FIG. 4 is a diagram illustrating a configuration of a first example of the present invention.
[FIG. 5] FIG. 5 is a table illustrating an example of operational data stored in an operational data database.
[FIG. 6] FIG. 6 is a diagram illustrating a configuration of a data classification unit according to the example of the present invention.
[FIG. 7] FIG. 7 is a graph illustrating a concept of a generation number of a category.
[FIG. 8] FIG. 8 is a flowchart illustrating a data classification algorithm according to the example of the present invention.
[FIG. 9] FIG. 9 is a graph illustrating an example in which data is diagnosed using a method described in the example of the present invention.
[FIG. 10] FIG. 10 is a table illustrating an example of operational data recorded in a classification result database according to the example of the present invention.
[FIG. 11] FIG. 11 is a table illustrating an example of a generation number recorded in the classification result database according to the example of the present invention.
[FIG. 12] FIG. 12 is a view illustrating an example of a condition setting screen of a display/operation unit according to the example of the present invention.
[FIG. 13] FIG. 13 is a view illustrating an example of a classification result display screen of the display/operation unit according to the example of the present invention.

Description of Embodiments

Hereinafter, an embodiment of the present invention will be described with reference to the accompanying drawings. First Example

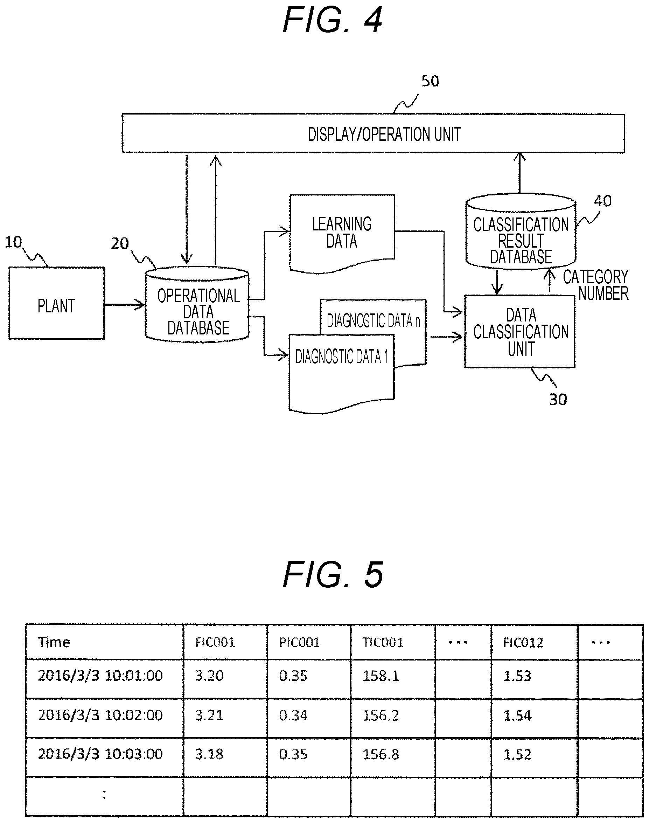

FIG. 4 illustrates a first example according to an embodiment of the present invention. The present example is an example in which a data classification device of the present invention is used for a plant abnormality diagnosis system, and includes a plant 10, an operational data database 20, a data classification unit 30, a classification result database 40, and a display/operation unit 50. An outline of each component will be described below.

The plant 10 is installed with sensors, such as a flowmeter, a thermometer, and a pressure gauge, which are used for control and monitoring of the plant.

The operational data database 20 stores data measured by the sensors of the plant 10 as time-series data for each minute. Normal data specified by the display/operation unit 50 is cut out from the stored operational data as learning data and sent to the data learning unit 30. In addition, data measured in real time in the plant is also temporarily stored in the operational data database, and then sent to the data classification unit 30 as diagnostic data at a fixed cycle.

The data classification unit 30 classifies multi-dimensional operational data into a plurality of categories using a clustering algorithm (hereinafter, referred to as an improved ART) based on the adaptive resonance theory (ART). The improved ART outputs not only a category number to which the input multi-dimensional data is classified but also a generation number indicating a generation order of the category number. In addition, the category number is determined in consideration of the generation number when classifying data. Incidentally, a detailed algorithm for determination of the category number will be described later.

The classification result database 40 manages the category numbers and the generation numbers of the respective categories output from the data classification unit 30.

The display/operation unit 50 sets conditions for learning data and diagnostic data as described above. In addition, a category number trend graph and a diagnostic result as illustrated in the lower part of FIG. 1 are displayed.

Next, the present example will be described in detail.

The plant 10 includes devices and pipes connecting the devices, valves, and the like. The sensors, such as the flowmeter, the thermometer, and the pressure gauge, are installed in the devices and pipes so as to monitor and control the state of the plant. For example, a tag, such as TIC001 in the case of the thermometer, is attached to these sensors. This tag serves as an ID of each sensor, and each sensor is identified based on tag information.

In the operational data database 20, data measured by the sensors of the plant 10 is recorded as time-series data. An example of the operational data is illustrated in FIG. 5. As illustrated in FIG. 1, data of the sensor installed in the plant 10 is stored for each time. Although this time interval can be arbitrarily specified, the time interval is set to one minute in the present example.

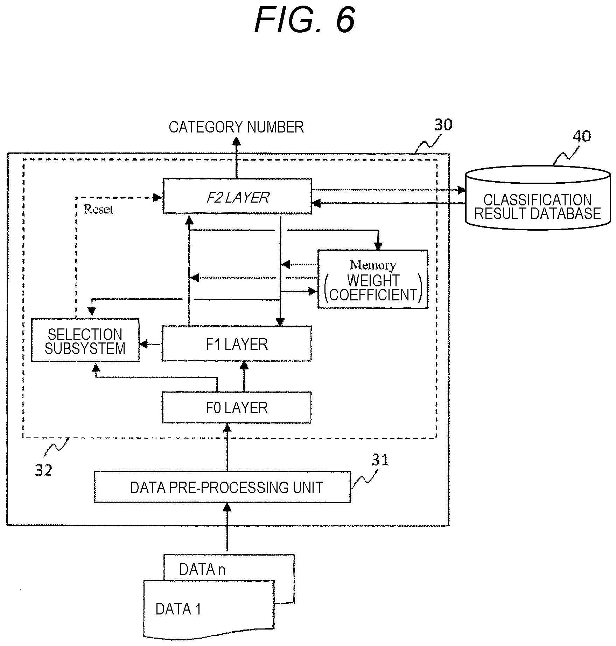

The data classification unit 30 classifies data using the improved ART based on the adaptive resonance theory (ART). FIG. 6 illustrates a detailed configuration of the data classification unit 30. The data classification unit 30 includes a data pre-processing unit 31 and an improved ART 32.

The data pre-processing unit 31 normalizes the operational data to the range of [0, 1], and adds a complement. Specifically, assuming that there is n-dimensional operational data $x_i$ (i = 1, 2, ..., and n), first, data $X_i$ (i = 1, 2, ..., and n) normalized by Formula (1) is prepared.

$$X_i = (x_i - x_{i\_lower})/(x_{i\_Upper} - x_{i\_lower}) \ ...\ (1)$$

Here, $x_{i\_Upper}$ is an upper limit of normalization and is a lower limit of $x_{i\_lower}$.

Next, a complement $X_{ci}$ of $X_i$ is obtained by Formula (2) to convert the data into 2n-dimensional data.

$$X_{ci} = 1 - X_i \ ...\ (2)$$

In this manner, the pre-processing of converting the n-dimensional data to the 2n-dimensional data is required when data is classified by the ART. The reason is described in NPL 2, and thus, will not be described here.

Next, the improved ART 32 will be described. A configuration of the improved ART illustrated in FIG. 6 is the same as the configuration of the conventional ART, but has a difference that a category is selected by utilizing a generation number stored in the classification result database 40. Therefore, improved points will be described after describing an outline of the conventional ART algorithm.

In an F0 layer, a magnitude of an input data vector is set to one to remove noise. In an F1 layer, the input data from which the noise has been removed is held as a short-term memory. In an F2 layer, a category that matches the input data the best is selected based on a weight coefficient defined for each category and the input data held in the F1 layer. A selection subsystem determines whether the category selected in the F2 layer is valid, and adopts the selected category as an output category if the category is valid. If the category is invalid, the selected category is determined to be rejected, and a reset signal is transmitted to the F2 layer. An appropriate category is selected by repeating this process. If all the categories are not adoptable, a new category is generated.

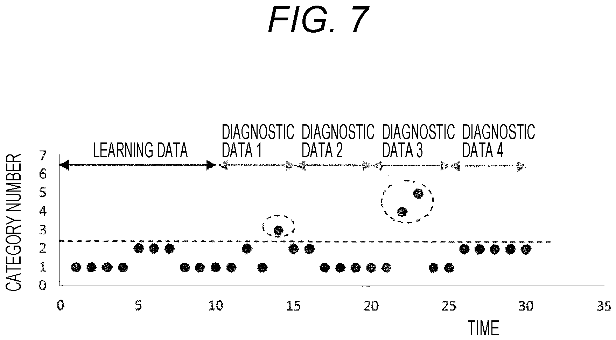

Next, the improved points will be described in detail. First, a generation number used in the present algorithm will be described. The generation number is newly defined as a number indicating the order in which the categories were generated. A specific example of the generation number will be described with reference to FIG. 7. This graph illustrates trend data of category numbers when diagnostic data 1 to diagnostic data 4 are diagnosed in order after learning with learning data. Category 0 and category 1 generated from the learning data are categories generated the earliest, and have generation number 0. Next, category 2 newly generated by inputting diagnostic data 1 has generation number 1, and category 3 and category 4 newly generated with diagnostic data 3 have generation number 2.

Next, processing of the improved algorithm using the generation number will be described. In the improved algorithm, a category with a smaller generation number is preferentially selected when selecting a category candidate in the F2 layer. That is, first, a candidate is selected from among categories with generation number 0 at the time of learning, and categories with generation number 1 are selected as candidates when all the categories with generation number 0 are determined to be inappropriate. Further, when all the categories with generation number 1 are determined to be inappropriate, categories with generation number 2 are selected as candidates. Finally, when all the categories are determined to be inappropriate, a new category is added.

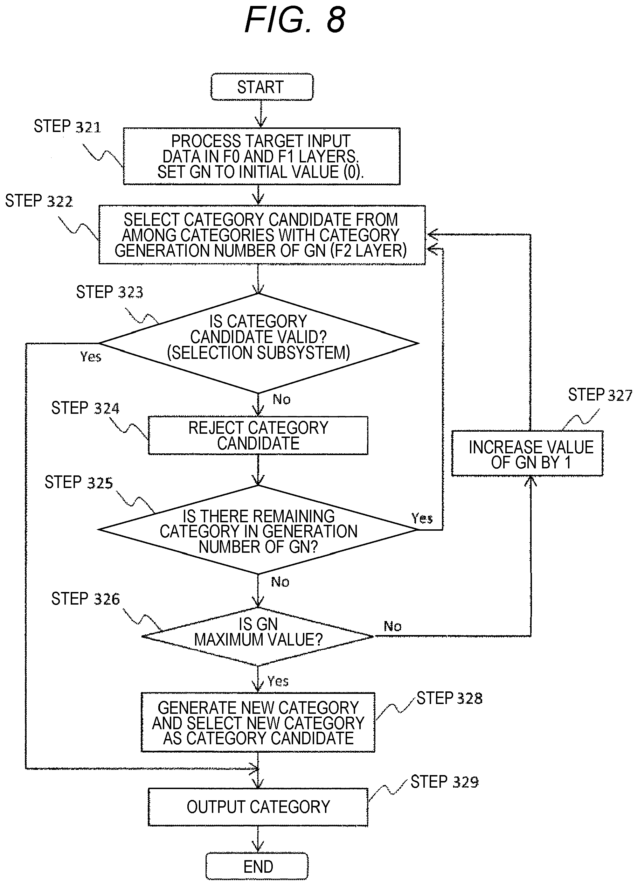

Details of the present algorithm are described in FIG. 8. In Step 321, target input data is input and processed in the F0 layer and the F1 layer. In addition, a variable GN is set to an initial value (0). In Step 322, the most appropriate category candidate is selected as a category of the target data from among categories with a generation number of GN in the F2 layer. In Step 323, whether the selected category candidate is valid or not is determined in the selection subsystem. If the selected category candidate is valid, the processing proceeds to Step 329, and the selected category is output. If the selected category candidate is invalid, the processing proceeds to Step 324. In Step 324, the selected category candidate is rejected. Incidentally, the rejected category does not become a candidate again for the target input data. In Step 325, it is determined whether there is a remaining category which has the generation number of GN and has not been rejected yet. If such a category remains, the processing returns to Step 322 to select a category candidate again. If such a category does not remain, the processing proceeds to Step 326. In Step 326, it is determined whether GN is the maximum value of the generation number. The processing proceeds to Step 327 if GN has not reached the maximum value, and proceeds to Step 328 if GN has reached the maximum value. In Step 327, the value of GN is increased by one, and the processing proceeds to Step 322. Through the above processing, the category candidate is selected again from among categories with the generation number increased by one. In Step 328, a new category is generated and set as a category candidate since the category candidates have been rejected for all the generation numbers based on the result of Step 326, and the processing proceeds to Step 329. In Step 329, the selected category candidate is output.

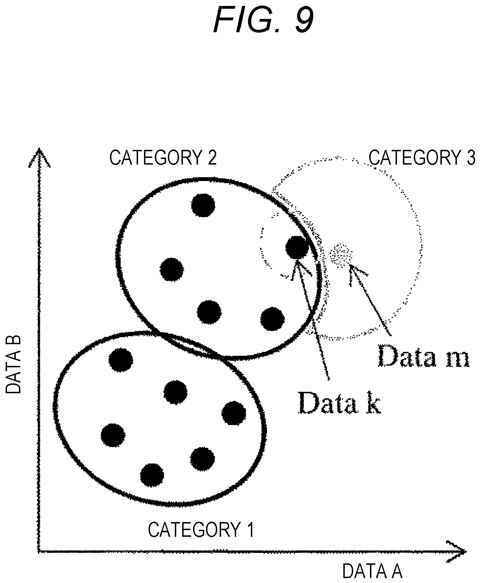

FIG. 9 illustrates an example in which data is classified using the present algorithm. The classified data is the same as the data illustrated in FIG. 3. In FIG. 9, data k classified into category 3 with the conventional algorithm is classified into category 2 in the present algorithm. That is, when such an algorithm is used, it is possible to prevent data that has been used as learning data from being classified as normal data.

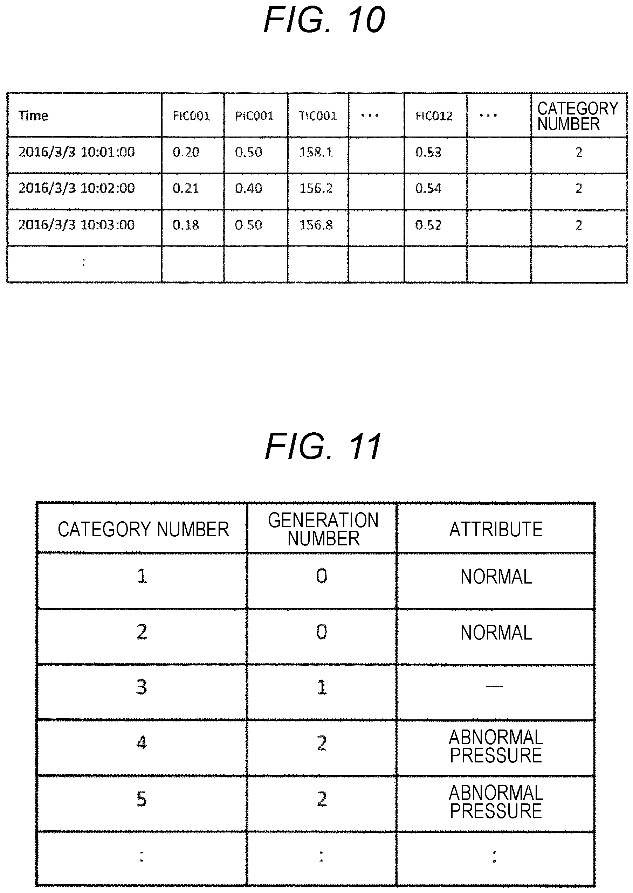

Next, the classification result database 40 will be described. An example of the classification result database is illustrated in FIGS. 10 and 11. In FIG. 10, normalized operational data and a category number to which the operational data has been classified are recorded. For example, FIC001 is normalized such that an upper limit of normalization is 4.0 and a lower limit is 3.0. In addition, it is understood that data at 10:01 to data at 10:03 are all classified into category 2 in the attached example.

In FIG. 11, information on the category is recorded. In the present example, generation numbers and attributes of the respective categories are recorded. The generation number indicates the generation order of the categories as described above. This table corresponds to the result of FIG. 7, and is recorded such that the generation numbers of categories 1 and 2 to which the learning data has been classified are zero, and the generation number of category 3 output when diagnostic data 1 has been classified is one. In addition, the attribute is configured to record the state of the plant when each category has been generated, and is an item that can be input by a user if necessary. In the example of FIG. 11, an abnormality was observed in a pressure of a device when category numbers 4 and 5 are generated, and thus, it is registered as "abnormal pressure".

Finally, the display/operation unit 50 will be described. The display/operation unit 50 sets the conditions for the learning data and the diagnostic data as described above, and displays the classification result.

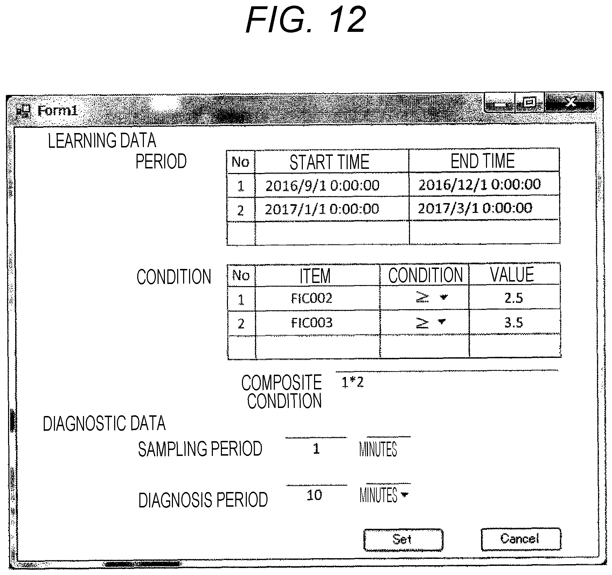

FIG. 12 illustrates an example of a condition setting screen. In the upper part of FIG. 12, the conditions of the learning data are set based on a period and a condition. As the period, a start time and an end time are specified, and data included in the period is extracted. In the example of Fig. 12, a period of five months in total including three months from 0:00 on September 1, 2016 to 0:00 on December 1, 2016 and two months from 0:00 on January 1, 2017 to 0:00 on March 1, 2017 is set as the learning period. However, not all the data included in the period is used, and conditions of the data to be used are specified in the "condition" column. Here, only data which matches an AND condition of two conditions including condition 1: a value of FIC002 is 2.5 or more and condition 2: a value of FIC003 is 3.5 or more is used as learning data. In addition, the example in which the AND condition of condition 1 and condition 2 is specified has been described in the present example, but an OR condition can also be specified by setting a formula of a composite condition portion to 1 + 2. When such conditions are set, it is possible to extract only data in which, for example, the amount of raw material supplied to the plant is equal to or more than a certain value to perform stable operation.

Next, a diagnostic data setting screen at the lower part of FIG. 12 will be described. At the time of diagnosis, a diagnosis cycle is set on a setting screen in order to diagnose data at a fixed diagnosis cycle. A sampling cycle is automatically determined based on time data of the data. The present example illustrates an example in which the sampling cycle is one minute. The diagnosis cycle is set to a value N times the sampling cycle (N = 1, 2, ...). In the present example, N is set to ten, and a diagnosis is performed every ten minutes. That is, ten pieces of one-minute data are collectively input to the data classification unit 50 every ten minutes, and categories of the ten pieces of data are determined.

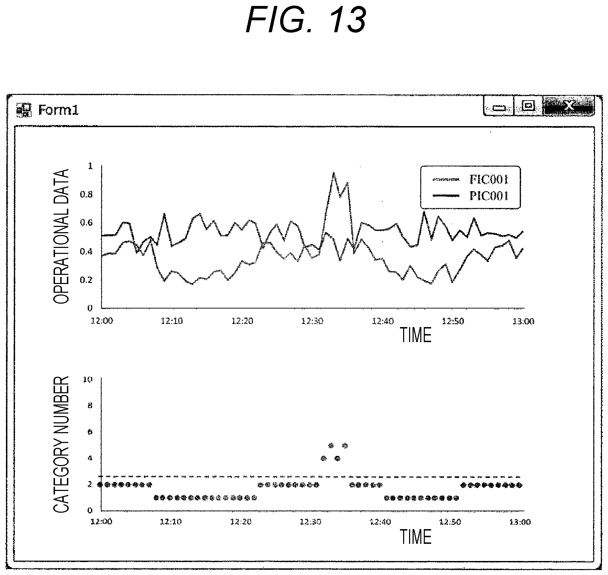

FIG. 13 is an example of a classification result display screen of the display/operation unit 50. Here, a trend graph of the operational data is displayed at the upper part, and a change of the category numbers during the same period as the trend graph is illustrated in the lower part. When a new category is generated and an abnormality is detected, the change in the operational data can be confirmed together by displaying such a result graph. In the present example, it is understood that category numbers of three or more are the new categories, and a value of PIC001 increases when the new categories are generated.

As described above, it is possible to prevent the data that has been used as the learning data from being classified as the normal data by using the data classification device of the present invention. In addition, when the state of the multi-dimensional time-series data is classified, reproducibility of past data classification results is improved.

Reference Signs List

10      plant
20      operational data database
30      data classification unit
40      classification result database
50      display/operation unit

**Claims**

1.  A data classification device comprising:

    a data classification unit that classifies operational data into a plurality of categories; and
    a classification result database that manages an output of the data classification unit,
    wherein the data classification unit preferentially selects a category with a smaller generation number representing a generation order of the category as a category candidate and determines a category of the operational data.

2.  The data classification device according to claim 1, wherein validity of the category candidate is determined, the category candidate is set as the category of the operational data if the category candidate is valid, and the category candidate is rejected if the category candidate is invalid.

3.  The data classification device according to claim 2, wherein when the rejection is determined, another category candidate is selected in a case where there is the other category candidate, and a new category is generated and selected as the category candidate in a case where the other category candidate does not exist.

4.  An abnormality diagnosis system including the data classification device according to any one of claims 1 to 3, the abnormality diagnosis system further comprising:

    a plant;
    an operational data database in which the operational data of the plant is stored; and
    a display/operation unit that selects normal data out of the operational data.

5.  The abnormality diagnosis system according to claim 4, wherein the display/operation unit sets a data classification period or a threshold of the data classification unit.

6.  The abnormality diagnosis system according to claim 4, wherein the display/operation unit displays a classification result of the classification result database.

# FIG. 1

# FIG. 2

## FIG. 3

# FIG. 4

# FIG. 5

| Time | FIC001 | PIC001 | TIC001 | ... | FIC012 | ... |
|---|---|---|---|---|---|---|
| 2016/3/3 10:01:00 | 3.20 | 0.35 | 158.1 | | 1.53 | |
| 2016/3/3 10:02:00 | 3.21 | 0.34 | 156.2 | | 1.54 | |
| 2016/3/3 10:03:00 | 3.18 | 0.35 | 156.8 | | 1.52 | |
| : | | | | | | |

# FIG. 6

CATEGORY NUMBER

30

40

F2 LAYER

Reset

CLASSIFICATION
RESULT DATABASE

Memory
$\begin{pmatrix} \text{WEIGHT} \\ \text{COEFFICIENT} \end{pmatrix}$

SELECTION
SUBSYSTEM

F1 LAYER

F0 LAYER

32

31

DATA PRE-PROCESSING UNIT

DATA n

DATA 1

# FIG. 7

# FIG. 8

```
                    START

STEP 321
              PROCESS TARGET INPUT
              DATA IN F0 AND F1 LAYERS.
              SET GN TO INITIAL VALUE (0).

STEP 322
              SELECT CATEGORY CANDIDATE FROM
              AMONG CATEGORIES WITH CATEGORY
              GENERATION NUMBER OF GN (F2 LAYER)

STEP 323
                  IS CATEGORY
                  CANDIDATE VALID?          Yes
                  (SELECTION SUBSYSTEM)

                        No

STEP 324       REJECT CATEGORY
               CANDIDATE                                STEP 327

STEP 325                                                INCREASE VALUE
              IS THERE REMAINING          Yes           OF GN BY 1
              CATEGORY IN GENERATION
              NUMBER OF GN?

                        No

STEP 326          IS GN              No
                  MAXIMUM VALUE?

                        Yes

              GENERATE NEW CATEGORY        STEP 328
              AND SELECT NEW CATEGORY
              AS CATEGORY CANDIDATE

                                          STEP 329
              OUTPUT CATEGORY

                    END
```

## FIG. 9

# FIG. 10

| Time | FIC001 | PIC001 | TIC001 | · · · | FIC012 | · · · | CATEGORY NUMBER |
|---|---|---|---|---|---|---|---|
| 2016/3/3 10:01:00 | 0.20 | 0.50 | 158.1 | | 0.53 | | 2 |
| 2016/3/3 10:02:00 | 0.21 | 0.40 | 156.2 | | 0.54 | | 2 |
| 2016/3/3 10:03:00 | 0.18 | 0.50 | 156.8 | | 0.52 | | 2 |
| ⋮ | | | | | | | |

# FIG. 11

| CATEGORY NUMBER | GENERATION NUMBER | ATTRIBUTE |
|---|---|---|
| 1 | 0 | NORMAL |
| 2 | 0 | NORMAL |
| 3 | 1 | — |
| 4 | 2 | ABNORMAL PRESSURE |
| 5 | 2 | ABNORMAL PRESSURE |
| ⋮ | ⋮ | ⋮ |

# FIG. 12

LEARNING DATA

PERIOD

| No | START TIME | END TIME |
|---|---|---|
| 1 | 2016/9/1 0:00:00 | 2016/12/1 0:00:00 |
| 2 | 2017/1/1 0:00:00 | 2017/3/1 0:00:00 |
|  |  |  |

CONDITION

| No | ITEM | CONDITION | VALUE |
|---|---|---|---|
| 1 | FIC002 | ≥ ▼ | 2.5 |
| 2 | FIC003 | ≥ ▼ | 3.5 |
|  |  |  |  |

COMPOSITE CONDITION    1*2

DIAGNOSTIC DATA

SAMPLING PERIOD    1    MINUTES

DIAGNOSIS PERIOD    10    MINUTES ▼

| Set | Cancel |
|---|---|

# FIG. 13

## INTERNATIONAL SEARCH REPORT

| International application No. |
| --- |
| PCT/JP2018/035281 |

| A. CLASSIFICATION OF SUBJECT MATTER |
| --- |
| Int.Cl. G06F17/30(2006.01)i, G05B23/02(2006.01)i |
| According to International Patent Classification (IPC) or to both national classification and IPC |

| B. FIELDS SEARCHED |
| --- |

Minimum documentation searched (classification system followed by classification symbols)
Int.Cl. G06F17/30, G05B23/02

| Documentation searched other than minimum documentation to the extent that such documents are included in the fields searched | |
| --- | --- |
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| A | JP 2005-165375 A (HITACHI, LTD.) 23 June 2005, paragraphs [0008]-[0031], fig. 1-4 (Family: none) | 1-6 |
| A | JP 2011-138374 A (HITACHI, LTD.) 14 July 2011, paragraphs [0047]-[0051] (Family: none) | 1-6 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 28 November 2018 (28.11.2018) | 11 December 2018 (11.12.2018) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Journal of the Japan Society of Mechanical Engineers,* 2015, vol. 118 (1163), 624-627

- **G. A. CARPENTER ; S. GROSSBERG.** ART2:Self-OrganizatioNo.f stable category recognition codes for analog input patterns. *Applied Optics,* 1987, vol. 26 (23